# EUROPÄISCHE PATENTSCHRIFT

(11) **EP 0 713 000 B1**
(45) Veröffentlichungstag und Bekanntmachung des Hinweises auf die Patenterteilung: **26.08.1998**
(21) Anmeldenummer: 94810657.0
(22) Anmeldetag: 21.11.1994
(51) Int. Cl.: F02B 75/20, F16F 15/24

(54) **Selbstzündende Hubkolbenbrennkraftmaschine**
Internal combustion diesel engine
Moteur Diesel à combustion interne

(43) Veröffentlichungstag der Anmeldung: 22.05.1996
(73) Patentinhaber: Wärtsilä NSD Schweiz AG, 8401 Winterthur (CH)
(72) Erfinder: Gläser, Robert, CH-8442 Hettlingen (CH); Jenzer, Jean, CH-8405 Winterthur (CH)
(74) Vertreter: Hammer, Bruno Dr.

(56) Entgegenhaltungen:
- DE-C- 417 192
- DE-C- 429 849
- GB-A- 437 175
- GB-A- 945 404

## Beschreibung

Die Erfindung bezieht sich auf eine selbstzündende Hubkolbenbrennkraftmaschine, insbesondere einen langsamlaufenden Zweitakt-Dieselmotor. Langsamlaufende Dieselmotoren sind in der Regel Grossdieselmotoren mit bis zu mehreren Tausend PS Leistung pro Zylinder. Diese Motoren werden z.B. in Schiffen und als sog. stationäre Motoren für den Antrieb von Generatoren für das Erzeugen von Strom verwendet. Die langsam laufenden Motoren weisen Drehzahlen von 50 bis 250 U/min (R.P.M.) auf.

Bei Dieselmotoren der vorliegenden Art ist es von Bedeutung, dass die auftretenden Schwingungen, die durch vom Motor erzeugte Kräfte und Momente erzeugt werden, sich in gewissen Grenzen halten. Damit wird einmal die mechanische Beanspruchung des Motors selbst reduziert und dessen Lebensdauer erhöht. Darüber hinaus können vom Motor erzeugte Schwingungen und Momente von Motoren in Kraftwerken und Schiffen sehr störend sein. Wesentliche Störgrössen, sind:

der Massenausgleich, d.h. die freien, äusseren und inneren Kräfte und Momente, die von den oszillierenden und rotierenden Massen des Motors herrühren; der Massenausgleich, der bei einem Motor ungenügend ist, führt zu unakzeptablen Schwingungen um die Querachse und die Hochachse des Motors, welche dann wiederum zu unakzeptablen Schwingungen im Gebäude oder im Schiff führen;

Querkräfte und Quermomente, d.h. die Kräfte und Momente in Querrichtung (bzw. um die Hochachse), die durch die am Kreuzkopf in Querrichtung wirkenden Gas- und Massenkräfte erzeugt werden; Querkräfte und Quermomente führen zu Schwingungen des Motors um seine Längsachse und zu Torsionsschwingungen des Motorblocks zwischen den beiden Enden, vorne und hinten.

Torsionsschwingungen in der Kurbelwelle bzw. in der Kurbelwelle und in den damit gekoppelten Wellen, welche durch die an der Kurbelwelle angreifenden harmonischen tangentialen Gas und Massenkräfte erzeugt werden; Torsionsschwingungen werden im wesentlichen an den Kröpfungen der Kurbelwelle angeregt und führen zu Drehschwingungen der Kurbelwelle und der gesamten Wellenleitung und können unerlaubte Torsionsschwingungen und Torsionsspannungen im Antriebs- Abtriebswellensystem verursachen.

Axialschwingungen der Kurbelwelle, bzw. in den damit gekoppelten Wellen, welche durch die an den Kurbeln der Kurbelwelle wirkenden harmonischen, radialen Gas- und Massenkräfte erzeugt werden. Diese können bei ungünstiger Zündfolge zu unerlaubten Axialschwingungen in der Kurbelwelle und damit zu störenden Schwingungen des Motors, im Gebäude oder Schiff führen.

In der Praxis geht es nun darum, Dieselmotoren so auszulegen, dass zwischen den wichtigsten Störquellen und Ursachen für Kräfte, Schwingungen und Momente ein günstiger Kompromiss gefunden wird.

Den Störungen der beschriebenen Art verhindernden, konstruktiven Massnahmen sind allein schon aus Kostengründen Grenzen gesetzt. Als eine zusätzliche Massnahme erweist sich die Wahl der optimalen Zündfolge des Motors als eine weitere Massnahme zur Verbesserung des Schwingungsverhaltens eines Motors.

Erfindungsgemäss ist eine selbstzündende Zweitakt-Hubkolbenbrennkraftmaschine durch die Merkmale im Kennzeichen des unabhängigen Anspruchs 1 gekennzeichnet. Die abhängigen Ansprüche beziehen sich auf besonders vorteilhafte Ausführungsformen der Erfindung. Die geschickte Auswahl der Zündfolge der Zylinder bietet vielerlei Möglichkeiten, mit geringem Aufwand wesentlich zu einem verbesserten Lauf des Motors beitragen kann. Je nach z.B. dem Verwendungszweck des Motors kann zwischen den wesentlichen Störparametern des Motors ein Optimum gefunden werden, bei dem bestimmte Störparameter mehr oder weniger stark kompensiert werden.

Sinnvolle Anforderungen an einen Zweitakt-Dieselmotor mit dreizehn Zylindern nach der Erfindung könnten beispielsweise wiefolgt lauten: Massenausgleich, d.h. äussere Massenkräfte und Momente wenigstens gleich gut oder besser als bei einem Reihen-Zweitakt-Dieselmotor mit neun Zylindern der gleichen Bauart und Baugrösse; Querkräfte und Quermomente der dritten bis achten Ordnung gleich oder kleiner als bei einem Reihen-Zweitakt-Dieselmotor mit zwölf Zylindern der gleichen Bauart und Baugrösse; interne Massenmomente kleiner oder wenigstens gleich niedrig wie bei einem Motor mit neun Zylindern; Torsionsschwingungen so gering, dass der Motor wenn möglich ohne zusätzliche Torsions-Dämpfungsvorrichtung betrieben werden kann; Axialschwingungen mit geringer Amplitude von weniger als einem Millimeter bis etwa zwei Millimeter am freien Ende und darüber hinaus so, dass das die Kräfte auf das Drucklager auf der Abtriebsseite des Motors begrenzt sind. Je nach Präferenz oder Anwendung kann vom Motorenbauer der einen oder anderen Zündfolge der Zylinder der Vorzug gegeben werden.

Bei einem Zweitakt-Dieselmotor mit 13 Zylindern nach der Erfindung ergeben sich theoretisch 479'001'600 mögliche Zündfolgen, wenn man annimmt, dass die Kröpfungen der Kurbelwelle gleichmässig über die 360° verteilt angeordnet sind. Beim Weglassen aller Symmetrien bleiben immer noch 47'174'400 mögliche Zündfolgen übrig. Darüber hinaus ergibt sich noch eine unendliche Menge von winkelmässig verschieden Anordnungen der Kröpfungen, wenn diese nicht gleichmässig sein sollen.

Generell ist zu beachten, dass bei der Numerierung der Zylinder in einer Zündfolge die Reihenfolge der Zylinder immer in der Gegendrehrichtung numeriert wird, d.h. bei einem im Uhrzeigersinn drehenden Motor erfolgt die Numerierung, bzw. Aufzählung der Zylinder im Gegenuhrzeigersinn und umgekehrt wird bei einem in Gegenuhrzeigersinn drehenden Motor im Uhrzeigersinn numeriert bzw. aufgezählt.

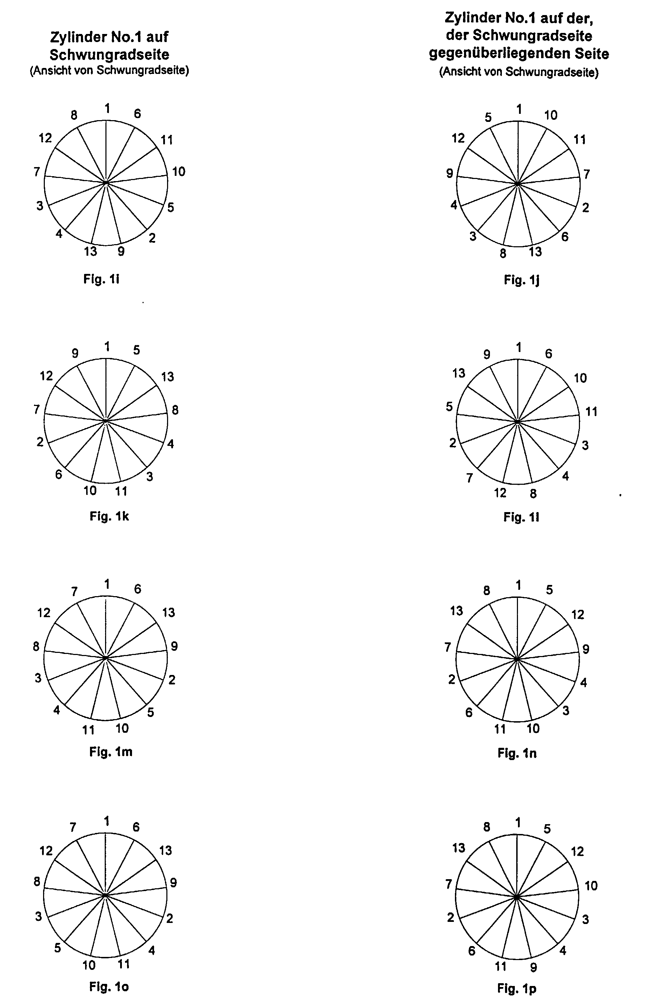

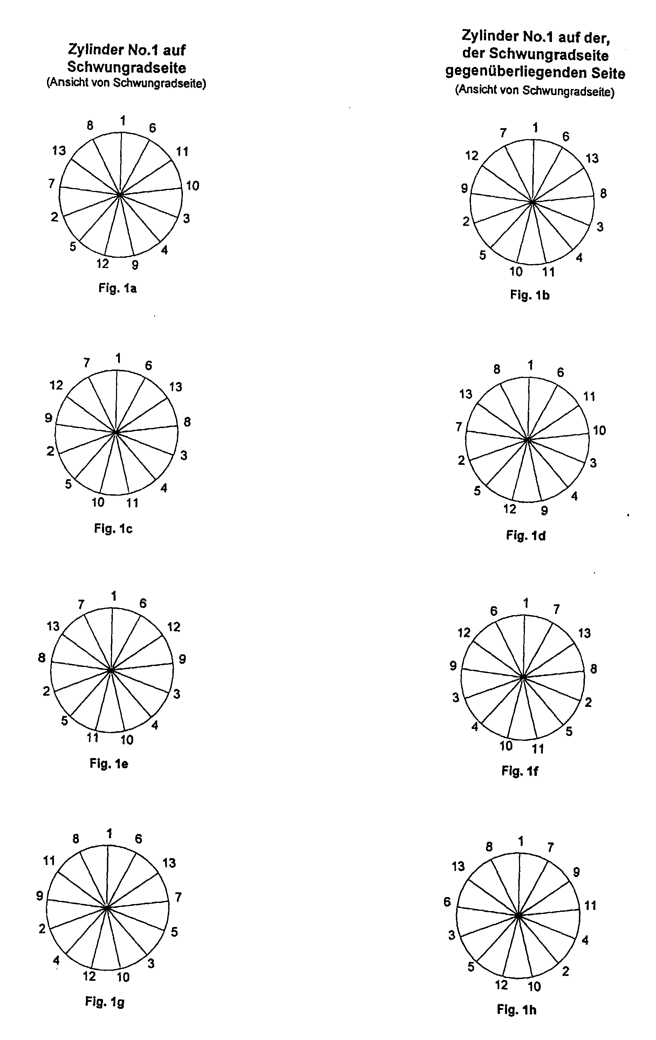

In den Figuren 1a bis 1p sind die Kubelsterne besonders vorteilhafter Zündfolgen nach der Erfindung schematisch dargestellt. Die Fig. 1a, 1c, 1e, 1g, 1i, 1k, 1m, 1o beziehen sich auf einen Zweitakt-Dieselmotor mit dreizehn Zylindern, bei dem die Zylinder aufeinanderfolgend numeriert sind und der mit 1 bezeichnete Zylinder sich auf der, der Seite befindet.

Die Fig. 1b, 1d, 1f, 1h, 1j, 1l, 1n, 1p beziehen sich auf einen Zweitakt-Dieselmotor mit dreizehn Zylindern, bei dem die Zylinder aufeinanderfolgend numeriert sind und der mit 1 bezeichnete Zylinder sich auf der Abtriebsseite gegenüberliegenden Seite befindet.

Die selbstzündende Hubkolbenbrennkraftmaschine weist dreizehn Zylinder auf, die in Reihe angeordnet sind. Die Zündfolge der Zylinder eins bis sieben erfolgt aufeinanderfolgend oder gemeinsam in Gruppen von je zwei oder drei Zylindern, wenn die Numerierung der Zylinder aufeinanderfolgend am einen Ende der Zylinderreihe des Motors begonnen wird.

## Patentansprüche

1. Selbstzündende Zweitakt-Hubkolbenbrennkraftmaschine, insbesondere langsamlaufender Zweitakt-Dieselmotor gekennzeichnet durch dreizehn Zylinder, die in Reihe angeordnet sind, und weiter die Kurbelwelle des Motors so ausgebildet ist, dass die Zündfolge der Zylinder eins bis sieben, in Gruppen von zwei und drei Zylindern aufeinander folgend oder miteinander, oder teilweise miteinander und teilweise aufeinander folgend zünden, wobei mit der Numerierung der Zylinder aufeinanderfolgend am einen der beiden Ende der Zylinderreihe des Motors begonnen wird.

2. Selbstzündende Zweitakt-Hubkolbenbrennkraftmaschine, nach Anspruch 1, bei welcher, wenn die Zylinder aufeinanderfolgend, von der Abtriebsseite her numeriert sind, die Zündfolge der dreizehn Zylinder, von der Abtriebseite her im Gegenuhrzeigersinn betrachtet, eine der folgenden ist:
1/8/13/7/2/5/12/9/4/3/10/11/6 oder
1/7/12/9/2/5/10/11/4/3/8/13/6 oder
1/7/13/8/2/5/11/10/4/3/9/12/6 oder
1/8/11/9/2/4/12/10/3/5/7/13/6 oder
1/8/12/7/3/4/13/9/2/5/10/11/6 oder
1/9/12/7/2/6/10/11/3/4/8/13/5 oder
1/7/12/8/3/4/11/10/5/2/9/13/6 oder
1/7/12/8/3/5/10/11/4/2/9/13/6
oder wenn die Zylinder aufeinanderfolgend, von der, der Abtriebsseite gegenüberliegenden Seite her numeriert sind und die Zündfolge der, dreizehn Zylinder von der Abtriebsseite her betrachtet im Gegenuhrzeigersinn eine der folgenden ist:
1/7/12/9/2/5/10/11/4/3/8/13/6 oder
1/8/13/7/2/5/12/9/4/3/10/11/6 oder
1/6/12/9/3/4/10/11/5/2/8/13/7 oder
1/8/13/6/3/5/12/10/2/4/11/9/7 oder
1/5/12/9/4/3/8/13/6/2/7/11/10 oder
1/9/13/5/2/7/12/8/4/3/11/10/6 oder
1/8/13/7/2/6/11/10/3/4/9/12/5 oder
1/8/13/7/2/6/11/9/4/3/10/12/5

3. Selbstzündende Zweitakt-Hubkolbenbrennkraftmaschine nach Anspruch 1 oder 2, bei welcher die Drehwinkeldifferenz der Kröpfung der Kurbelwelle für nacheinander zündende Zylinder wenigstens angenähert ^{360°}/₁₃ beträgt.

4. Selbstzündende Zweitakt-Hubkolbenbrennkraftmaschine nach Anspruch 1 oder 2, bei welcher die Drehwinkeldifferenz der Kröpfung der Kurbelwelle für aufeinanderfolgend zündende Zylinder im Bereich von 0° bis 2 x ^{360°}/₁₃ liegt.

## Claims

1. Compression ignition two-stroke reciprocating piston combustion engine, in particular a slow running two-stroke Diesel motor, characterised by thirteen cylinders arranged in line and wherein the crankshaft of the motor is designed so that the firing sequence of the cylinders one to seven fire in groups of two and three cylinders in sequence or together or partially together and partially in sequence, wherein the numbering of the cylinders is performed in sequence starting from one of the two ends of the line of cylinders of the motor.

2. Compression ignition two-stroke reciprocating piston combustion engine in accordance with claim 1, in which:
when the cylinders are numbered in sequence starting from the drive side, the firing sequence of the thirteen cylinders starting from the drive side as viewed in an anti-clockwise sense is one of the following:
1/8/13/7/2/5/12/9/4/3/10/11/6 or
1/7/12/9/2/5/10/11/4/3/8/13/6 or
1/7/13/8/2/5/11/10/4/3/9/12/6 or
1/8/11/9/2/4/12/10/3/5/7/13/6 or
1/8/12/7/3/4/13/9/2/5/10/11/6 or
1/9/12/7/2/6/10/11/3/4/8/13/5 or
1/7/12/8/3/4/11/10/5/2/9/13/6 or
1/7/12/8/3/5/10/11/4/2/9/13/6
when the cylinders are numbered in sequence from the end lying remote from the drive side and the firing sequence of the thirteen cylinders from the drive side as viewed in an anti-clockwise sense is one of the following:
1/7/12/9/2/5/10/11/4/3/8/13/6 or
1/8/13/7/2/5/12/9/4/3/10/11/6 or
1/6/12/9/3/4/10/11/5/2/8/13/7 or
1/8/13/6/3/5/12/10/2/4/11/9/7 or
1/5/12/9/4/3/8/13/6/2/7/11/10 or
1/9/13/5/2/7/12/8/4/3/11/10/6 or
1/8/13/7/2/6/11/10/3/4/9/12/5 or
1/8/13/7/2/6/11/9/4/3/10/12/5

3. Compression ignition two-stroke reciprocating piston combustion engine in accordance with claim 1 or 2, in which the difference in rotational angle of the crankshaft throw for subsequently firing cylinders amounts at least approximately to 360°/13.

4. Compression ignition two-stroke reciprocating piston combustion engine in accordance with claim 1 or 2, in which the difference in rotational angle of the crankshaft throw for subsequently firing cylinders lies in the range of 0° to 2 x 360°/13.

## Revendications

1. Moteur alternatif à combustion interne à deux temps à allumage spontané, notamment moteur diesel à deux temps tournant lentement, caractérisé par treize cylindres qui sont disposés en rangée, et où le vilebrequin du moteur est réalisé de façon que la succession d'allumage des cylindres un à sept, a lieu par des groupes de deux et trois cylindres successivement ou conjointement, ou partiellement conjointement et partiellement successivement, où la numérotation des cylindres commence d'une manière successive à l'une des deux extrémités de la rangée des cylindres du moteur.

2. Moteur alternatif à combustion interne à deux temps à allumage spontané selon la revendication 1 où, lorsque les cylindres sont numérotés successivement, à partir du côté mené, la succession d'allumage des treize cylindres, considérée depuis le côté mené dans le sens inverse des aiguilles d'une montre, est l'une des suivantes :
1/8/13/7/2/5/12/9/4/3/10/11/6 ou
1/7/12/9/2/5/10/11/4/3/8/13/6 ou
1/7/13/8/2/5/11/10/4/3/9/12/6 ou
1/8/11/9/2/4/12/10/3/5/7/13/6 ou
1/8/12/7/3/4/13/9/2/5/10/11/6 ou
1/9/12/7/2/6/10/11/3/4/8/13/5 ou
1/7/12/8/3/4/11/10/5/2/9/13/6 ou
1/7/12/8/3/5/10/11/4/2/9/13/6
ou
lorsque les cylindres sont numérotés successivement, depuis le côté opposé au côté mené, la succession d'allumage des treize cylindres, considérée depuis le côté mené, dans le sens inverse des aiguilles d'une montre est l'une des suivantes :
1/7/12/9/2/5/10/11/4/3/8/13/6 ou
1/8/13/7/2/5/12/9/4/3/10/11/6 ou
1/6/12/9/3/4/10/11/5/2/8/13/7 ou
1/8/13/6/3/5/12/10/2/4/11/9/7 ou
1/5/12/9/4/3/8/13/6/2/7/11/10 ou
1/9/13/5/2/7/12/8/4/3/11/10/6 ou
1/8/13/7/2/6/11/10/3/4/9/12/5 ou
1/8/13/7/2/6/11/9/4/3/10/12/5

3. Moteur alternatif à combustion interne à deux temps à allumage spontané selon la revendication 1 ou 2, où la différence de l'angle de rotation du coudage du vilebrequin représente pour des cylindres allumés les uns après les autres au moins approximativement ^{360°}/13.

4. Moteur alternatif à combustion interne à deux temps à allumage spontané selon la revendication 1 ou 2, où la différence de l'angle de rotation du coudage du vilebrequin pour des cylindres allumés les uns après les autres se situe dans la plage de 0° à 2 x ^{360°}/13.
